# EUROPÄISCHE PATENTSCHRIFT

(11) **EP 4 338 574 B1**
(45) Veröffentlichungstag und Bekanntmachung des Hinweises auf die Patenterteilung: **28.10.2026**
(21) Anmeldenummer: 23186373.9
(22) Anmeldetag: 19.07.2023
(51) Int. Cl.: A01D 75/28, A01F 12/44

(54) **MÄHDRESCHER MIT EINER REINIGUNGSVORRICHTUNG**
COMBINE HARVESTER WITH A CLEANING DEVICE
MOISSONNEUSE-BATTEUSE AVEC UN DISPOSITIF DE NETTOYAGE

(30) Priorität: 14.09.2022 DE 102022123506
(43) Veröffentlichungstag der Anmeldung: 20.03.2024
(73) Patentinhaber: CLAAS Selbstfahrende Erntemaschinen GmbH, 33428 Harsewinkel (DE)
(72) Erfinder: BRAND, Andreas, 33428 Marienfeld (DE); BRANDMEIER, Jonas, 33428 Harsewinkel (DE)
(74) Vertreter: CLAAS Gruppe

(56) Entgegenhaltungen:
- EP-A1- 4 042 859
- EP-A2- 2 796 032
- EP-B1- 3 571 920
- DE-A1- 4 106 814
- RU-C1- 2 613 456
- US-A- 5 489 029
- US-A1- 2013 210 505
- US-B2- 10 785 910
- US-B2- 10 959 380

## Beschreibung

Die vorliegende Erfindung betrifft einen Mähdrescher mit einer Reinigungsvorrichtung gemäß dem Oberbegriff des Anspruches 1.

Ein Mähdrescher mit einer Reinigungsvorrichtung der eingangs genannten Art ist aus DE 41 06 814 C2 bekannt. Von einem Vorbereitungsboden des Mähdreschers wird der Reinigungsvorrichtung zu reinigendes Erntegut zugeführt, wobei die Reinigungsvorrichtung zumindest ein luftdurchströmtes, in einen ersten Siebbereich und einen zweiten Siebbereich unterteiltes Sieb umfasst. Der erste Siebbereich und der zweite Siebbereich sind als kaskadenförmig angeordnete Teilsiebe ausgeführt. Der erste Siebbereich erstreckt sich ausgehend vom benachbarten Vorbereitungsboden abschnittsweise in Längsrichtung. Der zweite Siebbereich schließt sich, in Förderrichtung gesehen, an den ersten Siebbereich an, wobei sich der erste und zweite Siebbereich abschnittsweise in Längsrichtung des Siebes und in Querrichtung im Wesentlichen über die gesamte Siebbreite erstrecken. Die beiden Siebbereiche weisen jeweils eine Vielzahl an zueinander beabstandeten und durch eine Verstelleinrichtung verstellbare Lamellenreihen zur Verstellung einer Sieböffnungsweite auf. Der Öffnungswinkel der Lamellenreihen zur Änderung einer Sieböffnungsweite wird durch die Verstellvorrichtung in allen Siebbereichen gemeinsam eingestellt. Unter ungünstigen Erntebedingungen, insbesondere bei der Ernte von großkörnigem Erntegut, wie Mais, kann es aufgrund der Feuchtigkeit des Erntegutes zu einer unzureichenden Abförderung durch das Sieb kommen, was zu einem Rückstau und somit erhöhtem Kornverlust führen kann.

US 2013 210 505 A1 offenbart ein Sieb für eine Reinigungsvorrichtung eines Mähdreschers, umfassend einen Rahmen, in dem mehrere ähnliche, sich quer erstreckende Lamellen so angebracht sind, dass sie um jeweilige Querachsen, die durch in Längsrichtung gleichmäßig voneinander beabstandete Achsen definiert sind, winkelverstellbar sind. Die Lamellen sind nach oben und nach hinten geneigt, wobei benachbarte Lamellen vordere Abschnitte aufweisen, die die hinteren Abschnitte der anderen überlappen. Die Achsen umfassen Kurbeln, die Verstellelemente bilden, welche zur Wechselwirkung mit Schlitzen aufgenommen sind, die in einer sich in Längsrichtung erstreckenden Verstellstange vorgesehen sind, deren Position in Längsrichtung des Siebs relativ zum Rahmen verstellbar ist, um die Winkel der Lamelle um ihre Achsen einzustellen. Die Schlitze sind an der Einstellstange so geformt und angeordnet, dass mindestens eine Lamelle einen von einer anderen Lamelle abweichenden Winkel aufweist.

Ausgehend vom vorstehend genannten Stand der Technik liegt der Erfindung die Aufgabe zugrunde, einen Mähdrescher der eingangs genannten Art weiterzubilden, sodass die Nachteile des Standes der Technik vermieden werden, insbesondere eine verbesserte Abscheidung von großkörnigem, feuchten Erntegut ermöglicht wird.

Diese Aufgabe wird durch einen Mähdrescher mit den Merkmalen des unabhängigen Anspruches 1 gelöst. Vorteilhafte Ausführungsformen und Weiterbildungen sind den hiervon abhängigen Ansprüchen zu entnehmen.

Gemäß dem Anspruch 1 wird ein Mähdrescher mit einer Reinigungsvorrichtung vorgeschlagen, wobei der Reinigungsvorrichtung von einem Vorbereitungsboden zu reinigendes Erntegut zuführbar ist, wobei die Reinigungsvorrichtung zumindest ein luftdurchströmtes, in einen ersten Siebbereich und einen zweiten Siebbereich unterteiltes Sieb umfasst, wobei sich der erste Siebbereich ausgehend vom benachbarten Vorbereitungsboden abschnittsweise in Längsrichtung des Mähdreschers erstreckt und der zweite Siebbereich sich an den ersten Siebbereich anschließt, wobei sich der erste und zweite Siebbereich abschnittsweise in Längsrichtung des zumindest einen Siebes und in Querrichtung im Wesentlichen über die gesamte Siebbreite erstrecken, wobei die beiden Siebbereiche jeweils eine Vielzahl an zueinander beabstandeten und durch eine Verstelleinrichtung verstellbare Lamellenreihen zur Verstellung einer Sieböffnungsweite aufweisen. Erfindungsgemäß ist vorgesehen, dass die äquidistant angeordneten Lamellenreihen des ersten Siebbereiches mit einem Abstand zueinander angeordnet sind, der größer als ein Abstand ist, mit dem die äquidistant angeordneten Lamellenreihen des zweiten Siebbereiches zueinander angeordnet sind.

Durch die vergrößerte Beabstandung der Lamellenreihen innerhalb des ersten Siebbereichs gegenüber der Beabstandung der Lamellenreihen innerhalb des zweiten Siebbereichs wird im ersten Siebbereich eine Vergrößerung der Abscheidefläche erreicht. Dadurch kann insbesondere großkörniges Erntegut, wie insbesondere Mais, im ersten Siebbereich besser und im größeren Umfang abgeschieden werden, ohne dabei den Reinigungsgrad, d.h. die Kornsauberkeit, zu verringern.

Durch die vergrößerte offene Fläche im ersten Siebbereich wird die Kornabscheidung erhöht. Weniger Körner müssen entlang eines Kornbodens unterhalb des Siebes, welcher entgegen der Förderrichtung der Reinigungsvorrichtung geneigt ist, ihren Weg in eine der Abförderung dienende Kornförderschnecke nehmen, wodurch ein Rückstaueffekt vermieden wird. Ein Großteil der im ersten Siebbereich abgeschiedenen Körner kann direkt in die Kornförderschnecke fallen.

Hierzu kann der erste Siebbereich eine Ausdehnung in Längsrichtung respektive Förderrichtung aufweisen, die größer als 50 % und kleiner als 75 % der Erstreckung des Siebes in Längsrichtung ist, bevorzugt kann die Ausdehnung in Längsrichtung im Bereich zwischen 55 % und 65 % liegen.

Die Verstelleinrichtung umfasst zumindest eine Aktorik zur Übertragung einer Schwenkbewegung auf die Lamellenreihen des ersten Siebbereiches und des zweiten Siebbereiches, um die Lamellenreihen zwischen einer Schließstellung, in welcher die Siebbereiche im Wesentlichen geschlossenen sind, und einer Offenstellung zu überführen, in welcher die Siebbereiche geöffnet sind, wobei die zumindest eine Aktorik dazu eingerichtet ist, die Lamellenreihen in Offenstellung in Stellungen mit verschiedenen Öffnungswinkeln zu überführen, in denen die beiden Siebbereiche unterschiedliche Öffnungsweiten aufweisen. Das Einstellen verschiedener Öffnungswinkel in Offenstellung der beiden Siebbereiche und damit unterschiedlichen Sieböffnungsweiten im ersten Siebbereich und im zweiten Siebbereich ermöglicht, neben einer erhöhten Abscheidung im ersten Siebbereich, eine Anpassung an unterschiedliche Erntegutarten und/oder Erntebedingungen.

Des Weiteren kann die zumindest eine Aktorik dazu eingerichtet sein, die Lamellenreihen des ersten Siebbereiches mit einem höheren Übersetzungsverhältnis zu verschwenken als die Lamellenreihen des zweiten Siebbereiches. Somit kann die Öffnungsweite der Lamellenreihen im ersten Siebbereich gegenüber der Öffnungsweite der Lamellenreihen im zweiten Siebbereich überproportional zunehmen. Hierdurch kann insbesondere die Abscheidung von grobkörnigem Erntegut verbessert werden.

Dabei können die Öffnungswinkel der Lamellenreihen des ersten Siebbereiches und des zweiten Siebbereiches in der Schließstellung einander im Wesentlichen entsprechen. Bei im Wesentlichen geschlossenem Sieb ist die Öffnungsweite über die gesamte Sieblänge annähernd gleich.

Bevorzugt kann die Verstelleinrichtung mechanisch, elektromechanisch, hydraulisch oder pneumatisch betreibbar sein. Insbesondere kann die Verstelleinrichtung mit einem Linearantrieb ausgeführt sein.

Insbesondere können die Lamellen der Lamellenreihen des ersten Siebbereiches und des zweiten Siebbereiches baugleich oder voneinander abweichend ausgeführt sein. Die baugleiche Ausführung der Lamellen der Lamellenreihen beider Siebbereiche kann insbesondere vor dem Hintergrund der Kosten vorteilhaft sein. Eine voneinander abweichende Ausführung von Lamellen der Lamellenreihen des ersten Siebbereiches und Lamellenreihen des zweiten Siebbereiches kann vorteilhaft sein, um das Abscheideverhalten weiter zu verbessern. Insbesondere können sich die Lamellen der Lamellenreihen beider Siebbereiche durch unterschiedlichen Lamellenformen und/oder unterschiedliche Lamellenabmessungen unterscheiden.

Gemäß einer Weiterbildung kann die Verstelleinrichtung als zumindest eine Verstellstange mit daran angeordneten Verstellhebeln zum Schwenken der Lamellenreihen ausgeführt sein, die eine unterschiedliche Hebelübersetzung zwischen dem ersten Siebbereich und dem zweiten Siebbereich aufweist.

Alternativ kann die Verstelleinrichtung als zumindest zwei Zahnstangen ausgeführt sein, von denen eine Zahnstange dem ersten Siebbereich und die andere Zahnstange dem zweiten Siebbereich zugeordnet ist, wobei jede Zahnstange mit daran angeordneten Verstellhebeln zum Schwenken der Lamellenreihen ausgeführt ist, wobei die jeweilige Zahnstange durch ein angetriebenes Zahnrad in Längsrichtung verschiebbar ist. Um unterschiedliche Übersetzungsverhältnisse zwischen dem ersten Siebbereich und dem zweiten Siebbereich umzusetzen, können die Zahnräder unterschiedliche Durchmesser und/oder eine unterschiedliche Zähneanzahl aufweisen.

Gemäß einer Weiterbildung kann der Mähdrescher eine Steuereinheit umfassen, die dazu eingerichtet ist, die zumindest eine Aktorik der Verstelleinrichtung des zumindest einen Siebes anzusteuern, um im ersten Siebbereich den Öffnungswinkel der Lamellenreihen unabhängig vom Öffnungswinkel der Lamellenreihen des zweiten Siebbereiches einzustellen. Auf diese Weise kann differenzierter auf unterschiedliche Erntegutarten, feinkörniges und grobkörniges Erntegut, reagiert werden.

Die vorliegende Erfindung wird nachstehend anhand von in den Zeichnungen dargestellten Ausführungsbeispielen näher erläutert.

Es zeigen:
- Fig. 1: eine schematische Seitenansicht eines selbstfahrenden Mähdreschers;
- Fig. 2: eine schematische Darstellung eines erfindungsgemäß ausgebildeten Siebes;
- Fig. 3: eine schematische Darstellung einer weiteren Ausführungsform des Siebes; und
- Fig. 4: eine Teilansicht einer Reinigungsvorrichtung mit einem Sieb gemäß Fig. 3.

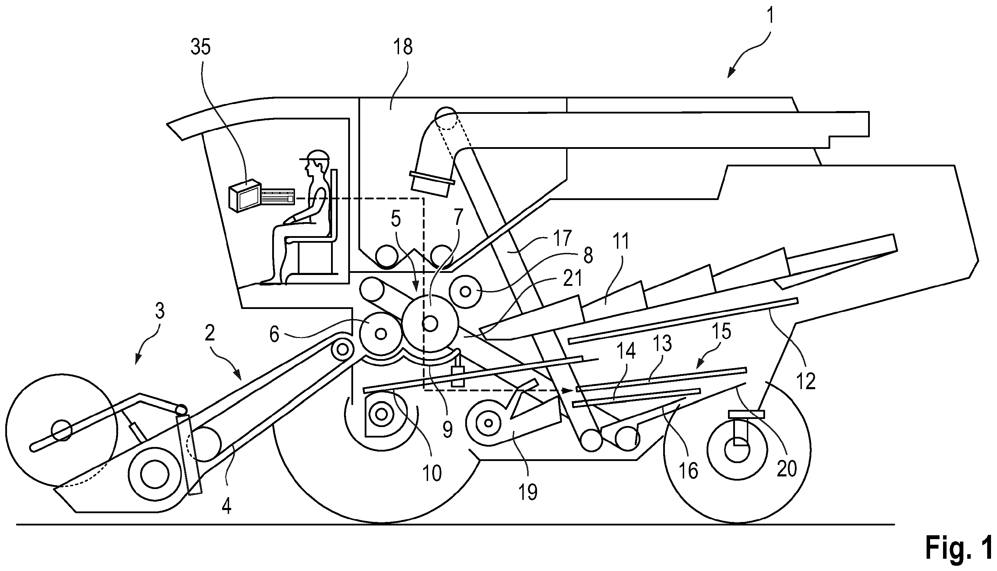

In Fig. 1 ist eine schematische Seitenansicht eines selbstfahrenden Mähdreschers 1 dargestellt. Der gezeigte Mähdrescher 1 trägt am vorderen Ende eines Einzugskanals 2 einen austauschbaren, für die Art eines abzuerntenden Erntegutes spezifisches Vorsatzgerät 3. Das von dem Vorsatzgerät 3 geschnittene Erntegut wird durch den Einzugskanal 2 mittels eines darin angeordneten Gurtbandförderers 4 einer Dreschvorrichtung 5 zugeführt. Die als Mehrtrommeldreschwerk ausgeführte Dreschvorrichtung 5 weist eine Vorbeschleunigertrommel 6, eine Dreschtrommel 7 sowie eine Zuführtrommel 8 auf. Durch die Vorbeschleunigertrommel 6 und insbesondere die Dreschtrommel 7 scheidet die Dreschvorrichtung 5 einerseits über zumindest einen abstandsveränderlichen Dreschkorb 9 einen überwiegend Kornbestandteile enthaltenden Gutstrom auf einen unterhalb des Dreschkorb 9 angeordneten Vorbereitungsboden 10 ab. Zum anderen wird ein im Wesentlichen Stroh und andere Nichtkornbestandteile enthaltender Gutstrom an eine Abscheidevorrichtung 11, die im dargestellten Ausführungsbeispiel als ein Hordenschüttler ausgeführt ist, abgegeben. Aus diesem Gutstrom werden von der Abscheidevorrichtung 11 noch Körner abgetrennt und über einen oszillierend angetriebenen Rücklaufboden 12 mit dem von der Dreschvorrichtung 5 abgeschiedenen Korn auf einem unterhalb des Dreschkorbs 9 angeordneten oszillierend angetriebenen Vorbereitungsboden 10 zusammengeführt. Von dort gelangen die Körner auf Siebe 13, 14 einer Reinigungsvorrichtung 15.

Einer alternativen Bauform des Mähdreschers 1 zufolge kann anstelle der als Hordenschüttlers ausgeführten Abscheidevorrichtung 11 zumindest ein Axialrotor zur Trennung von Korn und Nichtkornbestandteilen vorgesehen sein.

Das Sieb 13, wegen seiner Positionierung auch als Obersieb bezeichnet, umfasst teilweise miteinander überlappende Lamellenreihen, die gegeneinander beweglich sind, um die Größe von zwischen den Lamellenreihen gebildeten Öffnungen an die Korngröße des Ernteguts anzupassen, so dass die Körner durch das Obersieb 13 hindurch auf das, wegen seiner Positionierung unterhalb des Obersiebes 13 als Untersieb bezeichnete Sieb 14 fallen können. Das Untersieb 14 weist in gleicher Weise wie das Obersieb 13 größenverstellbare Öffnungen zwischen gegeneinander verstellbaren Lamellenreihen auf. Korn, das die Öffnungen beider Siebe 13, 14 passiert hat, wird von einem sich unter den Sieben 13, 14 erstreckenden Boden 16 aufgefangen und gelangt zu einer Förderschnecke 17, die es in einen Korntank 18 fördert.

Die Siebe 13, 14 führen eine Schwingbewegung aus, durch die auf ihnen liegendes Erntegut hochgeworfen, aufgelockert und zum Heck des Mähdreschers 1 hin gefördert wird und gleichzeitig leichte Nichtkornbestandteile des Ernteguts vom Luftstrom eines Gebläses 19 weggetragen und über eine Häcksel- und Verteilereinrichtung am Heck des Mähdreschers 1 ausgeschieden werden.

Schwere, gröbere Anteile des zu reinigenden Erntegutstromes, wie unausgedroschene Ährenspitzen, Erntegutbestandteile, welche die Siebe 13, 14 passieren, ohne abgeschieden oder durch den Reinigungsluftstrom ausgetragen zu werden, gelangen über einen unterhalb des Bodens 16 angeordneten Boden 20 in einen unterhalb der Siebe 13, 14 quer verlaufenden Schneckentrog. Eine in dem Schneckentrog rotierende Schnecke räumt die Erntegutbestandteile, welche auch als Überkehr bezeichnet werden, seitwärts zu einem Überkehrelevator 21, welcher es zurück zur Dreschvorrichtung 5 befördert.

Nachfolgend werden für identische oder funktionsgleiche Komponenten des Mähdreschers 1 die gleichen Bezugszeichen verwendet.

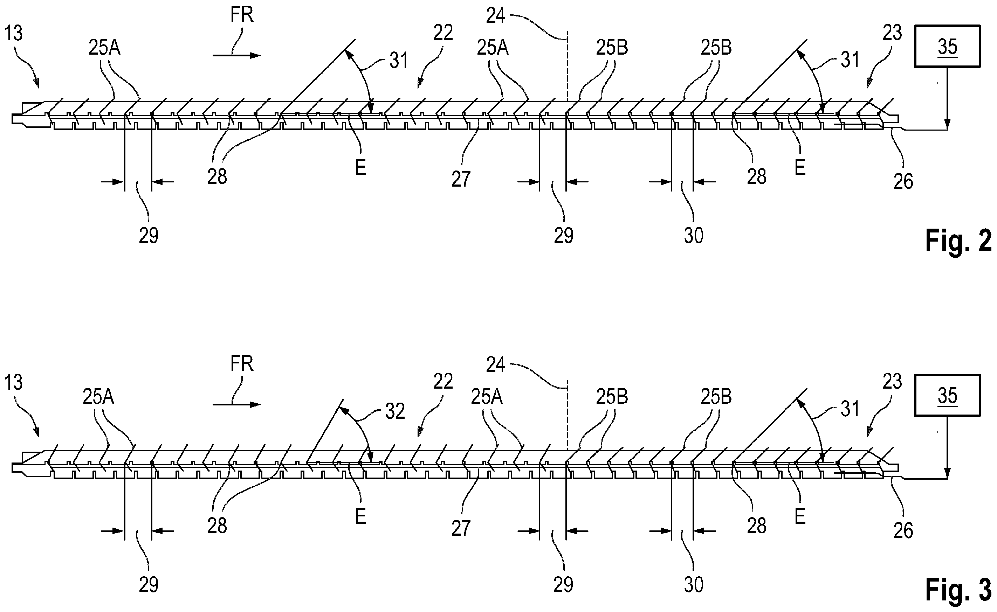

In Fig. 2 ist eine schematische Darstellung des zumindest einen erfindungsgemäß ausgebildeten Siebes 13, 14, hier das Obersieb 13, gezeigt. Das Obersieb 13 ist in zwei Siebbereiche 22, 23 unterteilt. In Förderrichtung FR gesehen ist der erste Siebbereich 22 dem Vorbereitungsboden 10 zugewandt. An den ersten Siebbereich 22 schließt sich, durch den ersten Siebbereich 22 beabstandet, der zweite Siebbereich 23 an. Die räumliche Trennung der beiden Siebbereiche 22, 23 ist durch eine gestrichelte Hilfslinie 24 veranschaulicht. Die beiden hintereinander angeordneten Siebbereiche 22, 23 des Obersiebes 13 sind in einer horizontalen Ebene im Siebrahmen, die nachfolgend als Siebebene E bezeichnet wird, positioniert.

Die beiden Siebbereiche 22, 23 weisen jeweils eine Vielzahl von zueinander benachbart angeordneten und durch zumindest eine Verstelleinrichtung 26 verstellbare Lamellenreihen 25A, 25B zur Verstellung einer Sieböffnungsweite von sich zwischen den einzelnen Lamellenreihen 25 ausbildenden Öffnungen 27 auf. Die Lamellenreihen 25A, 25B der beiden Siebbereich 22, 23 sind baugleich ausgeführt. Die Lamellenreihen 25A, 25B sind mittels der zumindest einen Verstelleinrichtung 26 jeweils um quer zur Förderrichtung FR verlaufende Schwenkachsen 28 verschwenkbar, wodurch sich die Öffnungsweite modifizieren lässt. Die Schwenkachsen 28 benachbarter Lamellenreihen 25A des ersten Siebbereiches 22 weisen jeweils einen Abstand 29 zueinander auf, der größer als ein Abstand 30 der Schwenkachsen 28 der Lamellenreihen 25B des zweiten Siebbereiches 23 ist.

Durch das gemeinsame Schwenken der Lamellenreihen 25A, 25B um die Schwenkachsen 28 stellen sich für alle Lamellenreihen 25A, 25B im Wesentlichen identische Öffnungswinkel 31 ein.

Der Effekt des größeren Abstands 29 zwischen den Schwenkachsen 28 der Lamellenreihen 25A gegenüber dem kleineren Abstand 30 der Lamellenreihen 25B des zweiten Siebbereiches 23 besteht darin, dass bereits im ersten Siebbereich 22 insbesondere für grobkörniges Erntegut wie Mais eine verstärkte Abscheidung erreicht wird.

In Fig. 3 ist eine schematische Darstellung einer weiteren Ausführungsform des Obersiebes 13 gezeigt. Von dem in Fig. 2 gezeigten und anhand der Darstellung in Fig. 2 erläuterten Obersieb 13 unterscheidet sich diese Ausführungsform des Obersiebes 13 dadurch, dass neben den unterschiedlich großen Abständen 29, 30 der Schwenkachsen 28 im ersten Siebbereich 22 und im zweiten Siebbereich 23 die Lamellenreihen 25A des ersten Siebbereiches 22 zusätzlich in geöffneter Position einen anderen Öffnungswinkel 31 aufweisen als die Lamellenreihen 25B des zweiten Siebbereiches 23, die den kleineren Öffnungswinkel 31 gemäß der in Fig. 3 dargestellten Ausführungsform aufweisen. Die Verstellung der Lamellenreihen 25A des ersten Siebbereiches 22 erfolgt durch die zumindest eine Verstellvorrichtung 26 in der Weise, dass sich die Öffnungswinkel 32 gegenüber den Öffnungswinkeln 31 der Lamellenreihen 25B des zweiten Siebbereiches 23 überproportional ändert.

Während in der geschlossenen Stellung der Lamellenreihen 25A, 25B der beiden Siebbereiche 22, 23 die Lamellenreihen 25A, 25B in eine Position überführt sind, in welcher sie zumindest annähernd parallel zur Siebebene E ausgerichtet sind, ändert sich der Öffnungswinkel 32 der Lamellenreihen 25A des ersten Siebbereiches 22 schneller als der Öffnungswinkel 31 der Lamellenreihen 25B des ersten Siebbereiches 23.

Hierdurch kann der durch die unterschiedlichen Abstände 29, 30 bereits erreichte Effekt der verbesserten Abscheidung im ersten Siebbereich 22 für grobkörniges Erntegut weiter verstärkt werden.

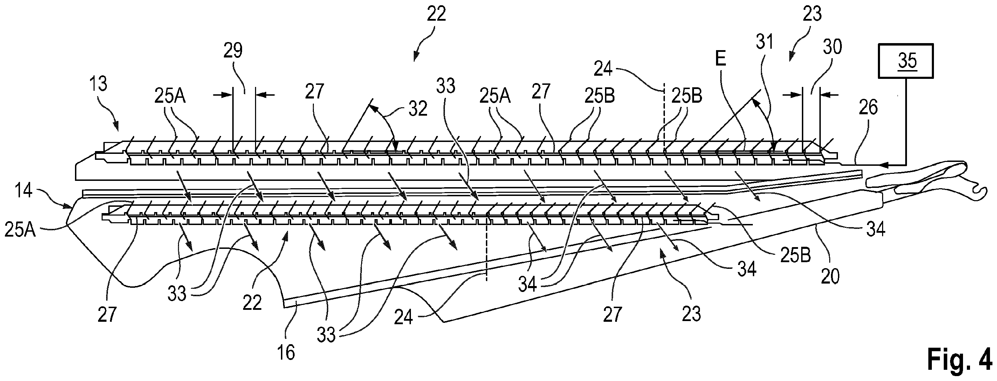

Die Darstellung in Fig. 4 zeigt eine Teilansicht der Reinigungsvorrichtung 15 mit dem zumindest einen erfindungsgemäßen Sieb 13 gemäß Fig. 3. In einem Siebkasten ist unterhalb des Obersiebes 13 das Untersieb 14 angeordnet. Das Untersieb 14 kann analog dem Obersieb 13 in zwei Siebbereiche, den ersten Siebbereich 22 und den zweiten Siebbereich 23, unterteilt sein. Weiterhin kann das Untersieb 14 identisch mit dem Obersieb 13 oder von der Ausgestaltung des Obersiebes 13 abweichend gemäß einer der in Fig. 2 und Fig. 3 dargestellten Ausführungsformen ausgebildet sein.

Das voneinander abweichende Abscheideverhalten im ersten Siebbereich 22 und im zweiten Siebbereich 23 ist durch Pfeile 33, 34 unterschiedlicher Strichstärke veranschaulicht. Die Pfeile 33 veranschaulichen die aufgrund einer größeren Öffnungsweite der Öffnungen 27 aufgrund des größeren Abstand 29 und des größeren Öffnungswinkels 32 im ersten Siebbereich 23 verstärkte Abscheidung des Korns aus dem der Reinigungsvorrichtung 15 zugeführten Erntegutstroms. Das verstärkt im ersten Siebbereich 22 abgeschiedene Erntegut gelangt auf den ersten Siebbereich 22 des darunter befindlichen Untersiebes 14. Wie aus der Darstellung ersichtlich, weist das Untersieb 14 neben den unterschiedlichen Abständen 29, 30 zwischen den Lamellenreihen 25A, 25B des ersten Siebereiches 22 und des zweiten Siebbereiches 23 zudem auch zumindest eine Verstellvorrichtung 26 auf, die dazu eingerichtet ist, den Öffnungswinkel 32 der Lamellenreihen 25A gegenüber dem Öffnungswinkel 31 der Lamellenreihen 25B überproportional zu verstellen.

Somit wird auch im ersten Siebereich 22 des Untersiebes 14 eine erhöhte Abscheidung erreicht.

Ein wesentlicher Effekt, der sich aus der erfindungsgemäßen Ausgestaltung des oder der Siebe 13, 14 ergibt, besteht darin, dass das vom Obersieb 13 und nachfolgend vom Untersieb 14 bereits im jeweiligen ersten Siebbereich 22 verstärkt abgeschiedene Erntegut (Pfeil 33) zu einem früheren Zeitpunkt respektive nach einem kürzeren Transportweg auf dem jeweiligen Sieb 13, 14 auf den Boden 16 gelangt, welcher das Korn der einer Förderschnecke 17 zuführt. Hierdurch kann ein Rückstaueffekt auf dem Boden 16 vermieden werden.

Ein weiterer Effekt besteht entsprechend in einer Entlastung durch den reduzierten Anteil an Überkehr, der Dreschvorrichtung 5 erneut zugeführt werden muss.

Bevorzugt kann der erste Siebbereich 22 eine Ausdehnung in Längsrichtung respektive Förderrichtung FR aufweisen, die größer als 50 % und kleiner 75 % der Erstreckung des zumindest einen Siebes 13, 14 in Längsrichtung ist. Besonders bevorzugt liegt die Ausdehnung des ersten Siebbereiches 22 im Bereich zwischen 55 % und 65 %.

Die jeweilige Verstelleinrichtung 26 umfasst zumindest eine Aktorik zur Übertragung einer Schwenkbewegung auf die Lamellenreihen 25A, 25B des ersten Siebbereiches 22 und des zweiten Siebbereiches 23, um die Lamellenreihen 25A, 25B zwischen einer Schließstellung, in welcher die Siebbereiche 22, 23 im Wesentlichen geschlossenen sind, und einer Offenstellung zu überführen, in welcher die Siebbereiche 22, 23 geöffnet sind. Die zumindest eine Aktorik der jeweiligen Verstelleinrichtung 26 von Obersieb 13 und Untersieb 14 ist dazu eingerichtet, die Lamellenreihen 25A, 25B in Stellungen mit verschiedenen Öffnungswinkeln 31, 32 zu überführen, in denen die Siebbereich 22, 23 unterschiedliche Öffnungsweiten aufweisen.

Die zumindest eine Aktorik der kann dazu eingerichtet sein, die Lamellenreihen 25A des ersten Siebbereiches 22 mit einem höheren Übersetzungsverhältnis zu verschwenken als die Lamellenreihen 25B des zweiten Siebbereiches 23. Somit kann die Öffnungsweite der Lamellenreihen 25A im ersten Siebbereich 22 gegenüber der Öffnungsweite der Lamellenreihen 25B im zweiten Siebbereich 23 überproportional zunehmen.

Der selbstfahrende Mähdrescher 1 kann eine Steuereinheit 35 umfassen, die dazu eingerichtet ist, die zumindest eine Aktorik der Verstelleinrichtung 26 des zumindest einen Siebes 13, 14 anzusteuern, um im ersten Siebbereich 22 den Öffnungswinkel 32 der Lamellenreihen 25A unabhängig vom Öffnungswinkel 31 der Lamellenreihen 25B des zweiten Siebbereiches 23 einzustellen. Während es bei grobkörnigem Erntegut sinnvoll ist, die Öffnungsweite im ersten Siebbereich 22 durch eine überproportionale Verstellung des Öffnungswinkel 32 der Lamellenreihen 25A gegenüber dem Öffnungswinkel 31 der Lamellenreihen 25B des zweiten Siebbereiches 23 zu verstellen, kann für feinkörniges Erntegut eine differenziertere Verstellung des Öffnungswinkel 32 der Lamellenreihen 25A gegenüber dem Öffnungswinkel 31 der Lamellenreihen 25B des zweiten Siebbereiches 23 erforderlich sein.

### Bezugszeichenliste

| | | | |
|---|---|---|---|
| 1 | Mähdrescher | 33 | Pfeil |
| 2 | Einzugskanal | 34 | Pfeil |
| 3 | Vorsatzgerät | 35 | Steuereinheit |
| 4 | Gurtbandförderer | FR | Förderrichtung |
| 5 | Dreschvorrichtung | | |
| 6 | Vorbeschleunigertrommel | | |
| 7 | Dreschtrommel | | |
| 8 | Zuführtrommel | | |
| 9 | Dreschkorb | | |
| 10 | Vorbereitungsboden | | |
| 11 | Abscheidevorrichtung | | |
| 12 | Rücklaufboden | | |
| 13 | Obersieb | | |
| 14 | Untersieb | | |
| 15 | Reinigungsvorrichtung | | |
| 16 | Boden | | |
| 17 | Förderschnecke | | |
| 18 | Korntank | | |
| 19 | Gebläse | | |
| 20 | Boden | | |
| 21 | Überkehrelevator | | |
| 22 | Erster Siebbereich | | |
| 23 | Zweiter Siebbereich | | |
| 24 | Hilfslinie | | |
| 25A | Lamellenreihe | | |
| 25B | Lamellenreihe | | |
| 26 | Verstelleinrichtung | | |
| 27 | Öffnung | | |
| 28 | Schwenkachse | | |
| 29 | Abstand | | |
| 30 | Abstand | | |
| 31 | Öffnungswinkel | | |
| 32 | Öffnungswinkel | | |

## Patentansprüche

1. Mähdrescher (1) mit einer Reinigungsvorrichtung (15), welcher von einem Vorbereitungsboden (10) zu reinigendes Erntegut zuführbar ist, wobei die Reinigungsvorrichtung (15) zumindest ein luftdurchströmtes, in einen ersten Siebbereich (22) und einen zweiten Siebbereich (23) unterteiltes Sieb (13, 14) umfasst, wobei sich der erste Siebbereich (22) ausgehend vom benachbarten Vorbereitungsboden (10) abschnittsweise in Längsrichtung des Mähdreschers (1) erstreckt und der zweite Siebbereich (23) sich an den ersten Siebbereich (22) anschließt, wobei sich der erste und zweite Siebbereich (22, 23) abschnittsweise in Längsrichtung des zumindest einen Siebes (13, 14) und in Querrichtung im Wesentlichen über die gesamte Siebbreite erstrecken, wobei die beiden Siebbereiche (22, 23) jeweils eine Vielzahl an zueinander beabstandeten und durch eine Verstelleinrichtung (26) verstellbare Lamellenreihen (25A, 25B) zur Verstellung einer Sieböffnungsweite aufweisen, **dadurch gekennzeichnet, dass** die äquidistant angeordneten Lamellenreihen (25A) des ersten Siebbereiches (22) mit einem Abstand (29) zueinander angeordnet sind, der größer als ein Abstand (30) ist, mit dem die äquidistant angeordneten Lamellenreihen (25B) des zweiten Siebbereiches (23) zueinander angeordnet sind, wobei die Verstelleinrichtung (26) zumindest eine Aktorik zur Übertragung einer Schwenkbewegung auf die Lamellenreihen (25A, 25B) des ersten Siebbereiches (22) und des zweiten Siebbereiches (23) umfasst, um die Lamellenreihen (25A, 25B) zwischen einer Schließstellung, in welcher die Siebbereiche (22, 23) im Wesentlichen geschlossenen sind, und einer Offenstellung zu überführen, in welcher die Siebbereiche (22, 23) geöffnet sind, wobei die zumindest eine Aktorik dazu eingerichtet ist, die Lamellenreihen (25A, 25B) in Offenstellung in Stellungen mit verschiedenen Öffnungswinkeln (31, 32) zu überführen, in denen die Siebbereiche (22, 23) unterschiedliche Öffnungsweiten aufweisen.

2. Mähdrescher (1) nach Anspruch 1, **dadurch gekennzeichnet, dass** der erste Siebbereich (22) eine Ausdehnung in Längsrichtung aufweist, die größer als 50 % und kleiner 75 % der Erstreckung des Siebes (15) in Längsrichtung ist, bevorzugt liegt die Ausdehnung im Bereich zwischen 55 % und 65 %.

3. Mähdrescher (1) nach Anspruch 1, **dadurch gekennzeichnet, dass** die zumindest eine Aktorik dazu eingerichtet ist, die Lamellenreihen (25A) des ersten Siebbereiches (22) mit einem höheren Übersetzungsverhältnis zu verschwenken als die Lamellenreihen (25B) des zweiten Siebbereiches (23).

4. Mähdrescher (1) nach Anspruch 1 oder 3, **dadurch gekennzeichnet, dass** die Öffnungswinkel (31, 32) der Lamellenreihen (25A) des ersten Siebbereiches (22) und des zweiten Siebbereiches (23) in der Schließstellung einander im Wesentlichen entsprechen.

5. Mähdrescher (1) nach einem der vorangehenden Ansprüche, **dadurch gekennzeichnet, dass** die Verstelleinrichtung (26) mechanisch, elektromechanisch, hydraulisch oder pneumatisch betreibbar ist.

6. Mähdrescher (1) nach einem der vorangehenden Ansprüche, **dadurch gekennzeichnet, dass** die Lamellenreihen (25A, 25B) des ersten Siebbereiches (22) und des zweiten Siebbereiches (23) baugleich oder voneinander abweichend ausgeführt sind.

7. Mähdrescher (1) nach einem der vorangehenden Ansprüche, **dadurch gekennzeichnet, dass** die Verstelleinrichtung (26) als zumindest eine Verstellstange mit daran angeordneten Verstellhebeln zum Schwenken der Lamellenreihen (25A, 25B) ausgeführt ist, die eine unterschiedliche Hebelübersetzung zwischen dem ersten Siebbereich (22) und dem zweiten Siebbereich (23) aufweist.

8. Mähdrescher (1) nach einem der vorangehenden Ansprüche, **dadurch gekennzeichnet, dass** die Verstelleinrichtung (26) als zumindest zwei Zahnstangen ausgeführt ist, von denen eine dem ersten Siebbereich (22) und die andere dem zweiten Siebbereich (23) zugeordnet ist, wobei jede Zahnstange mit daran angeordneten Verstellhebeln zum Schwenken der Lamellenreihen (25A, 25B) ausgeführt ist, wobei die jeweilige Zahnstange durch ein angetriebenes Zahnrad in Längsrichtung verschiebbar ist.

9. Mähdrescher (1) nach einem der vorangehenden Ansprüche, **dadurch gekennzeichnet, dass** der Mähdrescher (1) eine Steuereinheit (35) umfasst, die dazu eingerichtet ist, die zumindest eine Aktorik der Verstelleinrichtung (26) des zumindest einen Siebes (13, 14) anzusteuern, um im ersten Siebbereich (22) den Öffnungswinkel (32) der Lamellenreihen (25A) unabhängig vom Öffnungswinkel (31) der Lamellenreihen (25B) des zweiten Siebbereiches (23) einzustellen.

## Claims

1. Combine harvester (1) with a cleaning device (15), to which crop which is to be cleaned can be supplied from a preparation pan (10), wherein the cleaning device (15) comprises at least one sieve (13, 14) through which air flows and which is divided into a first sieve region (22) and a second sieve region (23), wherein the first sieve region (22) extends in sections in the longitudinal direction of the combine harvester (1) proceeding from the adjacent preparation pan (10) and the second sieve region (23) adjoins the first sieve region (22), wherein the first and second sieve regions (22, 23) extend in sections in the longitudinal direction of the at least one sieve (13, 14) and extend substantially over the entire sieve width in the transverse direction, wherein the two sieve regions (22, 23) each have a multiplicity of rows of lamellae (25A, 25B), which are spaced apart from one another and are adjustable by an adjusting device (26), for adjusting a sieve opening width, **characterized in that** the equidistantly arranged rows of lamellae (25A) of the first sieve region (22) are arranged at a distance (29) from one another which is greater than a distance (30) at which the equidistantly arranged rows of lamellae (25B) of the second sieve region (23) are arranged with respect to one another, wherein the adjusting device (26) comprises at least one actuator for transmitting a pivoting movement to the rows of lamellae (25A, 25B) of the first sieve region (22) and of the second sieve region (23) in order to transfer the rows of lamellae (25A, 25B) between a closed position in which the sieve regions (22, 23) are substantially closed, and an open position in which the sieve regions (22, 23) are open, wherein the at least one actuator is configured to transfer the rows of lamellae (25A, 25B) in the open position into positions with different opening angles (31, 32) in which the sieve regions (22, 23) have different opening widths.

2. Combine harvester (1) according to Claim 1, **characterized in that** the first sieve region (22) has an extent in the longitudinal direction which is greater than 50% and less than 75% of the extent of the sieve (15) in the longitudinal direction; the extent is preferably in the range between 55% and 65%.

3. Combine harvester (1) according to Claim 1, **characterized in that** the at least one actuator is configured to pivot the rows of lamellae (25A) of the first sieve region (22) at a higher transmission ratio than the rows of lamellae (25B) of the second sieve region (23).

4. Combine harvester (1) according to Claim 1 or 3, **characterized in that** the opening angles (31, 32) of the rows of lamellae (25A) of the first sieve region (22) and of the second sieve region (23) substantially correspond to one another in the closed position.

5. Combine harvester (1) according to one of the preceding claims, **characterized in that** the adjusting device (26) is operable mechanically, electromechanically, hydraulically or pneumatically.

6. Combine harvester (1) according to one of the preceding claims, **characterized in that** the rows of lamellae (25A, 25B) of the first sieve region (22) and of the second sieve region (23) are of identical construction or of different design from one another.

7. Combine harvester (1) according to one of the preceding claims, **characterized in that** the adjusting device (26) is designed as at least one adjusting rod with adjusting levers arranged thereon for pivoting the rows of lamellae (25A, 25B), which adjusting rod has a different lever transmission ratio between the first sieve region (22) and the second sieve region (23).

8. Combine harvester (1) according to one of the preceding claims, **characterized in that** the adjusting device (26) is designed as at least two toothed racks, one of which is assigned to the first sieve region (22) and the other to the second sieve region (23), wherein each toothed rack is designed with adjusting levers arranged thereon for pivoting the rows of lamellae (25A, 25B), wherein the respective toothed rack is displaceable in the longitudinal direction by a driven gearwheel.

9. Combine harvester (1) according to one of the preceding claims, **characterized in that** the combine harvester (1) comprises a control unit (35) which is configured to activate the at least one actuator of the adjusting device (26) of the at least one sieve (13, 14) in order to set the opening angle (32) of the rows of lamellae (25A) in the first sieve region (22) independently of the opening angle (31) of the rows of lamellae (25B) of the second sieve region (23).

## Revendications

1. Moissonneuse-batteuse (1) comprenant un dispositif de nettoyage (15), auquel du produit récolté à nettoyer peut être acheminé depuis un fond de préparation (10), le dispositif de nettoyage (15) comprenant au moins un tamis (13, 14) traversé par un flux d'air et subdivisé en une première zone de tamis (22) et une deuxième zone de tamis (23), la première zone de tamis (22) s'étendant, à partir du fond de préparation (10) adjacent, par sections dans la direction longitudinale de la moissonneuse-batteuse (1), et la deuxième zone de tamis (23) faisant suite à la première zone de tamis (22), la première et la deuxième zone de tamis (22, 23) s'étendant par sections dans la direction longitudinale de l'au moins un tamis (13, 14) et, dans la direction transversale, sensiblement sur toute la largeur du tamis, les deux zones de tamis (22, 23) présentant chacune une pluralité de rangées de lamelles (25A, 25B) espacées les unes des autres et réglables au moyen d'un dispositif de réglage (26) afin de régler une largeur d'ouverture du tamis, **caractérisée en ce que** les rangées de lamelles (25A) disposées à égale distance de la première zone de tamis (22) sont disposées les unes par rapport aux autres avec un espacement (29) supérieur à un espacement (30) avec lequel les rangées de lamelles (25B) disposées à égale distance de la deuxième zone de tamis (23) sont disposées les unes par rapport aux autres, le dispositif de réglage (26) comprenant au moins un système d'actionnement destiné à transmettre un mouvement de pivotement aux rangées de lamelles (25A, 25B) de la première zone de tamis (22) et de la deuxième zone de tamis (23), afin de faire passer les rangées de lamelles (25A, 25B) d'une position de fermeture, dans laquelle les zones de tamis (22, 23) sont sensiblement fermées, à une position d'ouverture, dans laquelle les zones de tamis (22, 23) sont ouvertes, l'au moins un système d'actionnement étant conçu pour amener les rangées de lamelles (25A, 25B), en position d'ouverture, dans des positions présentant des angles d'ouverture (31, 32) différents, dans lesquelles les zones de tamis (22, 23) présentent des largeurs d'ouverture différentes.

2. Moissonneuse-batteuse (1) selon la revendication 1, **caractérisée en ce que** la première zone de tamis (22) présente une dimension dans la direction longitudinale qui est supérieure à 50 % et inférieure à 75 % de l'étendue du tamis (15) dans la direction longitudinale, la dimension étant de préférence comprise entre 55 % et 65 %.

3. Moissonneuse-batteuse (1) selon la revendication 1, **caractérisée en ce que** l'au moins un système d'actionnement est conçu pour faire pivoter les rangées de lamelles (25A) de la première zone de tamis (22) avec un rapport de transmission supérieur à celui des rangées de lamelles (25B) de la deuxième zone de tamis (23).

4. Moissonneuse-batteuse (1) selon la revendication 1 ou 3, **caractérisée en ce que** les angles d'ouverture (31, 32) des rangées de lamelles (25A) de la première zone de tamis (22) et de la deuxième zone de tamis (23) sont sensiblement identiques en position de fermeture.

5. Moissonneuse-batteuse (1) selon l'une des revendications précédentes, **caractérisée en ce que** le dispositif de réglage (26) peut être actionné mécaniquement, électromécaniquement, hydrauliquement ou pneumatiquement.

6. Moissonneuse-batteuse (1) selon l'une des revendications précédentes, **caractérisée en ce que** les rangées de lamelles (25A, 25B) de la première zone de tamis (22) et de la deuxième zone de tamis (23) sont de construction identique ou différente les unes des autres.

7. Moissonneuse-batteuse (1) selon l'une des revendications précédentes, **caractérisée en ce que** le dispositif de réglage (26) est réalisé sous la forme d'au moins une tige de réglage munie de leviers de réglage disposés sur celle-ci pour faire pivoter les rangées de lamelles (25A, 25B), laquelle présente un rapport de levier différent entre la première zone de tamis (22) et la deuxième zone de tamis (23).

8. Moissonneuse-batteuse (1) selon l'une des revendications précédentes, **caractérisée en ce que** le dispositif de réglage (26) est réalisé sous la forme d'au moins deux crémaillères, dont l'une est associée à la première zone de tamis (22) et l'autre à la deuxième zone de tamis (23), chaque crémaillère étant munie de leviers de réglage disposés sur celle-ci pour faire pivoter les rangées de lamelles (25A, 25B), chaque crémaillère étant déplaçable dans la direction longitudinale au moyen d'une roue dentée entraînée.

9. Moissonneuse-batteuse (1) selon l'une des revendications précédentes, **caractérisée en ce que** la moissonneuse-batteuse (1) comprend une unité de commande (35) conçue pour commander l'au moins un système d'actionnement du dispositif de réglage (26) de l'au moins un tamis (13, 14), afin de régler, dans la première zone de tamis (22), l'angle d'ouverture (32) des rangées de lamelles (25A) indépendamment de l'angle d'ouverture (31) des rangées de lamelles (25B) de la deuxième zone de tamis (23).
